# EUROPÄISCHE PATENTANMELDUNG

(11) **EP 1 832 429 A2**
(43) Veröffentlichungstag der Anmeldung: **12.09.2007**
(21) Anmeldenummer: 06023120.6
(22) Anmeldetag: 07.11.2006
(51) Int. Cl.: B41J 3/28, B41J 3/407, B41J 3/44, B41J 11/00, B44C 5/04, H04N 1/00

(54) **Vorrichtung zum Bemustern von Werkstücken**

(30) Priorität: 08.03.2006 EP 06004713; 12.06.2006 EP 06012041; 25.08.2006 EP 06017767; 25.08.2006 EP 06017769; 25.08.2006 EP 06017766
(71) Anmelder: Homag Holzbearbeitungssysteme AG, 72296 Schopfloch (DE)
(72) Erfinder: Albrecht, Ludwig, 72280 Dornstetten-Aach (DE); Frey, Karl, Dipl.-Ing., 72296 Schopfloch (DE); Gauss, Achim, 72280 Dornstetten/Hallwangen (DE)
(74) Vertreter: HOFFMANN EITLE

(57) **Zusammenfassung**

Die Erfindung betrifft eine Vorrichtung (1) zum Bemustern von Werkstücken (2), die bevorzugt zumindest teilweise aus Holz, Holzwerkstoffen oder dergleichen bestehen, mit einer Ink-Jet-Druckeinrichtung (10) mit einer Mehrzahl von Düsen (12), aus denen Tintentropfen ausgestoßen werden können, einer Werkstücktrageinrichtung (20) zum Tragen des zu bemusternden Werkstücks (2), einer Fördervorrichtung zum Herbeiführen einer Relativbewegung zwischen dem zu bemusternden Werkstück (2) und der Druckeinrichtung (10). Die erfindungsgemäße Vorrichtung ist dadurch gekennzeichnet, dass sie ferner mindestens einen Bilderfassungssensor (46) aufweist.

## Beschreibung

### Technisches Gebiet

Die Erfindung betrifft eine Vorrichtung zum Bemustern von Werkstücken, die bevorzugt zumindest teilweise aus Holz, Holzwerkstoffen oder dergleichen bestehen, nach dem Oberbegriff von Anspruch 1.

### Stand der Technik

Eine Vorrichtung der eingangs genannten Art ist beispielsweise aus der DE 100 31 030 B4 bekannt und besitzt Sensoren zur Groberfassung der Kontur und Dicke der zu bedruckenden Werkstücke, die an einer Fördervorrichtung bzw. an einem Portal angebracht sind. Allerdings hat sich gezeigt, dass die mit einer derartigen Vorrichtungen bedruckten Werkstücke häufig ein verzerrtes, verschmiertes oder auch Fehlstellen und Farbabweichungen aufweisendes Druckbild ergeben.

Ferner betrifft die von der Anmelderin eingereichte, noch nicht veröffentlichte Europäische Patentanmeldung EP 05 009 326.9 ebenfalls eine Vorrichtung nach dem Oberbegriff von Anspruch 1.

### Darstellung der Erfindung

Es ist daher Aufgabe der vorliegenden Erfindung, eine gattungsgemäße Vorrichtung zum Bemustern von Werkstücken bereitzustellen, die eine verbesserte Druckbildqualität ermöglicht.

Diese Aufgabe wird erfindungsgemäß durch eine Vorrichtung nach Anspruch 1 und ein Verfahren nach Anspruch 7 gelöst. Besonders vorteilhafte Weiterbildungen der Erfindung sind in den abhängigen Ansprüchen angegeben.

Der Erfindung liegt der Gedanke zugrunde, den Druckvorgang durch ein gezieltes Pre- und/oder Postprocessing auf eine völlig neue Informationsbasis zu stellen. Zu diesem Zweck ist vorgesehen, dass die erfindungsgemäße Vorrichtung ferner mindestens einen Bilderfassungssensor aufweist. Durch das Vorsehen mindestens eines Bilderfassungssensors werden völlig neue Möglichkeiten zur Steuerung und Optimierung des Druckvorganges eröffnet. So wird es beispielsweise möglich, schon vor dem Druckvorgang ("Preprocessing") die genaue Relativposition des Werkstücks in Bezug auf die Druckeinrichtung durch den Bilderfassungssensor zu bestimmen. Hierdurch können Verzerrungen und Verschmierungen des Druckbildes, die durch eine unzureichende Relativpositionierung verursacht werden, vermieden oder minimiert werden. Auch ein "Overspray", d.h. dass über einen freien Rand des Werkstücks hinaus gedruckt wird und sich Tintennebel auf einer benachbarten Oberfläche des Werkstücks absetzt, kann wirksam verhindert werden.

Aber auch nach einem Druckvorgang (bzw. vor einem nachfolgenden Druckvorgang) kann der erfindungsgemäß vorgesehene Bilderfassungssensor wirksam zur Analyse der Werkstückoberfläche eingesetzt werden. Beispielsweise kann mittels des Bildsensors eine Analyse der Werkstückoberfläche im Hinblick auf mögliche Fehlstellen, Farbabweichungen oder dergleichen durchgeführt werden, um auf dieser Grundlage die Druckeinrichtung zu überprüfen und beispielsweise zu warten, zu reinigen, zu justieren etc.

Durch diese und weitere mögliche Anwendungen des Bilderfassungssensors kann die Druckbildqualität gegenüber dem Stand der Technik deutlich erhöht werden. Dabei ist unter Bilderfassungssensor zumindest jegliche Einrichtung zu verstehen, die auf optischer Basis arbeitet und Informationen über das (für den Menschen sichtbaren oder nicht sichtbare) Erscheinungsbild liefert, so dass eine große Vielfalt von Einrichtungen eingesetzt werden kann, wie beispielsweise auch Spektralphotometer mit oder ohne (RGB-)Filter.

Um die oben beschriebenen und weitere mögliche Anwendungen des Bilderfassungssensors effizient zur Verbesserung der Druckbildqualität umsetzen zu können, ist gemäß einer Weiterbildung der Erfindung vorgesehen, dass die Vorrichtung ferner eine Steuereinrichtung aufweist, die mit dem mindestens einen Bilderfassungssensor und der Ink-Jet-Druckeinrichtung in Verbindung steht.

Der Bilderfassungssensor kann im Rahmen der vorliegenden Erfindung auf unterschiedlichste Art und Weise ausgestaltet sein. Im Hinblick auf eine schnelle und präzise Erfassung der jeweiligen Werkstückoberfläche ist gemäß einer Weiterbildung der Erfindung jedoch vorgesehen, dass mindestens ein Bilderfassungssensor eine Kamera und/oder ein Farbmessgerät aufweist. Dabei hat sich eine CCD-Kamera als besonders vorteilhaft erwiesen, da die erhaltenen digitalen Daten besonders einfach und schnell an eine Steuereinrichtung oder dergleichen weitergegeben werden können.

Auch die Steuereinrichtung kann im Rahmen der vorliegenden Erfindung auf unterschiedlichste Art und Weise ausgestaltet sein. Es ist auch nicht ausgeschlossen, dass die Steuereinrichtung teilweise den Eingriff einer Bedienperson erfordert. Im Hinblick auf die angestrebte, verbesserte Druckbildqualität ist gemäß einer Weiterbildung der Erfindung jedoch vorgesehen, dass die Steuereinrichtung eingerichtet ist, von dem Bilderfassungssensor erhaltene Bilddaten zu analysieren, und zwar bevorzugt zumindest hinsichtlich Farbspektrum und/oder Fehlstellen und/oder Geometrie und/oder Farbraum (z. B. RGB-Farbraum) des jeweiligen Werkstücks.

Gerade beim Einsatz des mindestens einen Bilderfassungssensors zur Erfassung des Farbspektrums, aber auch der Fehlstellen, ist es wichtig, dass zum Erfassungszeitpunkt ein reproduzierbares Druckbild vorliegt. Vor diesem Hintergrund ist gemäß einer Weiterbildung der Erfindung vorgesehen, dass die Vorrichtung ferner eine Trocknungseinrichtung, insbesondere eine UV-Trocknungseinrichtung aufweist. Hierdurch kann ein vorbestimmter Trocknungszustand der aufgebrachten Tinte erzeugt werden, bevor die jeweilige Bilderfassung durchgeführt ist.

Die oben beschriebenen Vorteile der erfindungsgemäßen Vorrichtung lassen sich besonders vorteilhaft durch ein Verfahren zum Bemustern von Werkstücken gemäß Anspruch 7 erzielen. Dabei ist es besonders bevorzugt, dass die durch die Bilderfassung erhaltenen Ist-Bilddaten mit Soll-Bilddaten verglichen werden und zwar insbesondere hinsichtlich Farbspektrum und/oder Fehlstellen und/oder Geometrie und/oder Farbraum (z. B. RGB-Farbraum). Dieser Soll-/Ist-Vergleich kann vorteilhaft als Grundlage für eine Verbesserung der Druckqualität, beispielsweise durch die bereits oben beschriebenen Maßnahmen, herangezogen werden.

Dabei ist gemäß einer Weiterbildung der Erfindung vorgesehen, dass die von der Steuereinrichtung zur Druckeinrichtung ausgegebenen Steuersignale auf der Grundlage des Soll-/Ist-Vergleichs korrigiert werden, um die Soll-/Ist-Abweichung zu minimieren. Die Steuereinrichtung sorgt somit auf der Grundlage der Bilderfassung durch den Bilderfassungssensor, dass das tatsächlich erstellte Druckbild sich möglichst nahe am gewünschten Druckbild bewegt, d.h. dass eine optimale Druckbildqualität erzielt wird.

Um dies zu erreichen, kann die Steuereinrichtung unterschiedlichste Maßnahmen treffen. Als besonders wirksam hat es sich jedoch erwiesen, dass die Steuereinrichtung gemäß einer Weiterbildung der Erfindung die zur Druckeinrichtung ausgegebenen Steuersignal derart korrigiert, dass die Intensität und/oder der Verlauf der Steuerimpulse zu mindestens einer Düse der Druckeinrichtung verändert werden. Dabei können Steuerimpulse auch vollständig entfallen, d.h. die von der Steuereinrichtung zur Druckeinrichtung ausgegebenen Steuersignale können derart korrigiert werden, dass eine oder mehrere Düsen zu- oder abgeschaltet werden.

Alternativ oder zusätzlich kann die Steuereinrichtung jedoch auch feststellen bzw. entscheiden, dass die ermittelte Soll-/Ist-Abweichung durch eine Verschmutzung des Druckkopfes, insbesondere der Düsen, verursacht wird. Für diesen Fall ist gemäß einer Weiterbildung des erfindungsgemäßen Verfahrens vorgesehen, dass auf der Grundlage des Soll-/Ist-Vergleichs bei Vorliegen einer vorbestimmten Soll-/Ist-Abweichung eine Reinigung der Druckeinrichtung durchgeführt wird. Auch kann die Steuereinrichtung, beispielsweise bei Fehlschlagen von Korrekturmaßnahmen, entscheiden, dass eine grundlegende Wartung der Vorrichtung oder sogar ein Nothalt der Vorrichtung erforderlich ist.

Ferner ist zu beachten, dass der Bilderfassungssensor kontinuierlich oder diskontinuierlich arbeiten kann, und dass er während des normalen Betriebs der Vorrichtung oder auch während eines Überprüfungsbetriebes der Vorrichtung, in welchem beispielsweise vorbestimmte Testmuster gedruckt und durch den Bilderfassungssensor erfasst werden, arbeiten kann. Ferner kann der Bilderfassungssensor an einer beliebigen Stelle der Vorrichtung platziert sein, wobei es sich als vorteilhaft erwiesen hat, dass zumindest ein Bilderfassungssensor an der Druckeinrichtung vorgesehen ist.

### Kurze Beschreibung der Zeichnungen

- Fig. 1: zeigt schematisch eine Perspektivansicht einer Vorrichtung zum Bemustern von Werkstücken gemäß einer Ausführungsform der Erfindung;
- Fig. 2: zeigt schematisch eine teilweise Draufsicht der in Fig. 1 gezeigten Vorrichtung;
- Fig. 3: zeigt schematisch eine teilweise geschnittene Frontansicht der in Fig. 1 gezeigten Vorrichtung;
- Fig. 4: zeigt weitere Details der Druckeinrichtung in Fig. 1 gezeigten Vorrichtung;
- Fig. 5: zeigt weitere Details der Druckeinrichtung der in Fig. 1 gezeigten Vorrichtung;
- Fig. 6: veranschaulicht den Betrieb der in Fig. 1 gezeigten Vorrichtung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

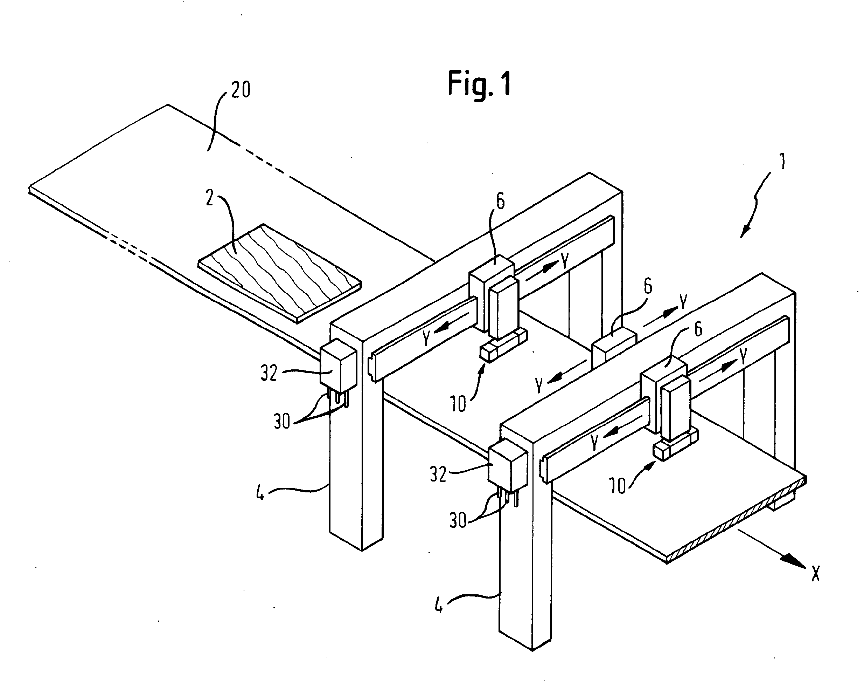

Eine Vorrichtung 1 zum Bemustern von Werkstücken 2 als bevorzugte Ausführungsform der vorliegenden Erfindung ist in Fig. 1 schematisch in einer Perspektivansicht gezeigt. Die Vorrichtung dient zum Bemustern und ggf. Bearbeiten von Werkstücken 2, die in der vorliegenden Ausführungsform zumindest teilweise aus Holz, Holzwerkstoffen, Kunststoffen oder dergleichen bestehen, wie sie im Bereich des Möbel- und Küchenbaus häufig zum Einsatz kommen.

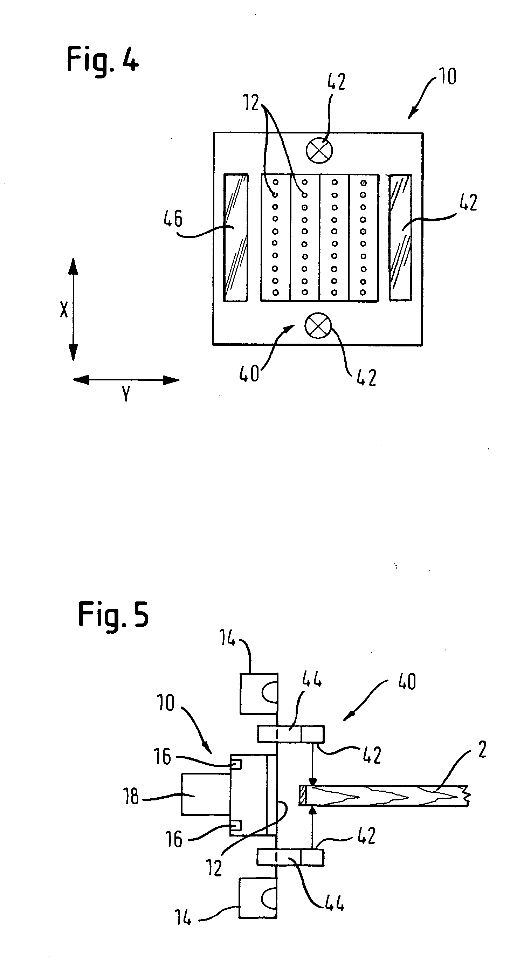

Die Vorrichtung 1 umfasst eine Ink-Jet-Druckeinrichtung 10, die in der vorliegenden Ausführungsform nach dem Drop-on-Demand-Prinzip arbeitet. Wie in Fig. 4 am besten zu erkennen ist, umfasst die Ink-Jet-Druckeinrichtung 10 eine Mehrzahl von Düsen 12, aus denen Tintentropfen ausgestoßen werden können und die in der vorliegenden Ausführungsform in mehreren Reihen angeordnet sind, wobei jede Reihe zum Ausstoßen einer vorbestimmten Farbe vorgesehen ist, beispielsweise den Farben Cyan, Magenta, Gelb und Schwarz.

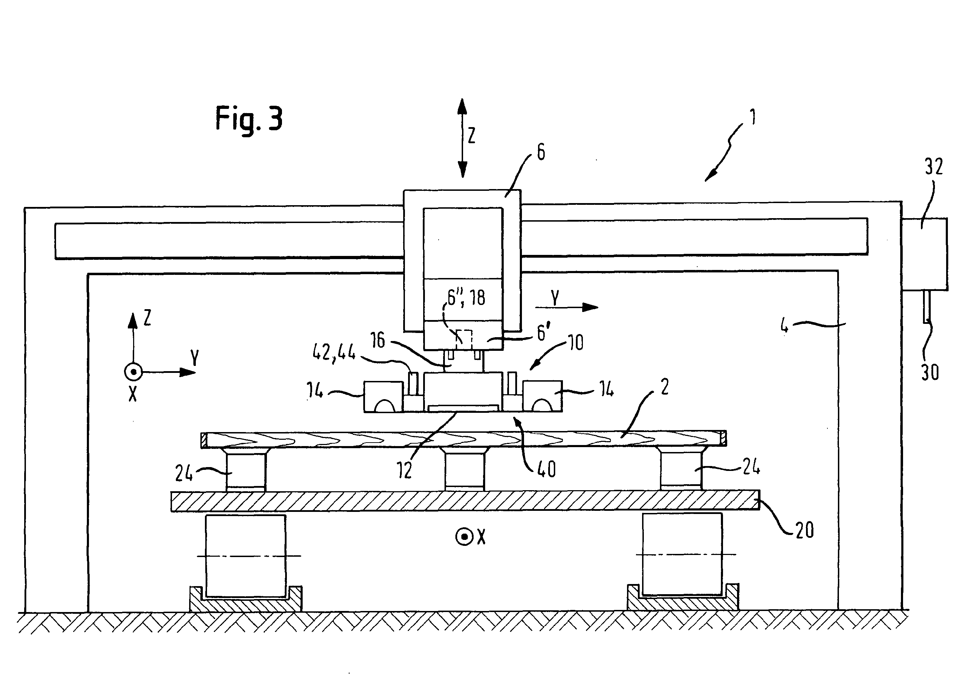

Die Druckeinrichtung 10 ist in der vorliegenden Ausführungsform an einer Spindeleinheit 6 vorgesehen bzw. in diese eingewechselt, was in Fig. 3 am besten zu erkennen ist. Bei der Spindeleinheit handelt es sich bevorzugt um eine solche Spindeleinheit, die auch zur ein- und auswechselbaren Aufnahme von Bearbeitungswerkzeugen oder Bearbeitungsaggregaten geeignet ist und die zu diesem Zweck eine Werkzeugaufnahme 6' und eine Schnittstelle 6" aufweist, wobei die Schnittstelle beispielsweise zur Übertragung von Daten, Energie, Antrieb, Fluids etc. ausgelegt sein kann.

Um das Einwechseln der Druckeinrichtung (Druckeinheit) 10 in die Spindeleinheit zu ermöglichen, ist die Druckeinheit 10 in der vorliegenden Ausführungsform mit einem Anschlussstutzen 18 versehen, der in die Werkzeugaufnahme 6' der Spindeleinheit einwechselbar ist (vgl. Fig. 3). Ferner weist die Druckeinheit 10 Übertragungsmittel 16 auf (vgl. Fig. 3), die mit der Schnittstelle 6" der Spindeleinheit kommunizieren können. Dabei können beispielsweise Daten, Energie, Antrieb, Fluids etc. und insbesondere auch Tinte übertragen werden. Darüber hinaus kann die Druckeinheit 10 einen Tintenvorrat und/oder eine schnurlose Datenübertragungseinrichtung aufweisen, obgleich dies in den Figuren nicht gezeigt ist.

Die Spindeleinheit 6 ist in y-Richtung verfahrbar an einem Portal 4 vorgesehen, das selbst wiederum in x-Richtung verfahrbar ausgestaltet sein kann. Dabei sind in der vorliegenden Ausführungsform zwei Portale 4 vorgesehen, die jeweils eine oder mehrere Spindeleinheiten 6 tragen können, die gegebenenfalls auf gegenüberliegenden Seiten des jeweiligen Portals 4 angeordnet sein können. Dabei ist zu beachten, dass die Portale 4 gegebenenfalls auch als Ausleger ausgestaltet sein können.

Die Spindeleinheiten 6 können über an den Portalen 4 jeweils vorgesehene Werkzeugmagazine 32 mit Bearbeitungswerkzeugen und/oder Bearbeitungsaggregaten 30 sowie einer oder mehreren Druckeinheiten 10 automatisch oder manuell bestückt werden (Fig. 3). D. h., die Druckeinheiten 10 sind derart ausgestaltet, dass sie ebenfalls in den Magazinen 32 abgelegt werden können.

Im Rahmen der vorliegenden Ausführungsform können unterschiedlichste Bearbeitungswerkzeugen und/oder Bearbeitungsaggregaten 30 zu Einsatz kommen wie beispielsweise spanende Werkzeuge (Bohrer, Fräser, etc.), Kantenanleimaggregate, Extrudieraggregate, Beschichtungsaggregate, Kaschieraggregate, Reinigungsaggregate, Entfettungsaggregate, Aggregate zum Verbessern der Haftungs- und Benetzungseigenschaften der zu bedruckenden Oberflächen und Aggregate zum Verminderung der elektrostatischen Aufladung der zu bedruckenden Oberflächen. Diese Werkzeuge und Aggregate können selbstverständlich auch eigenständig (unabhängig von einer Spindeleinheit) angeordnet sein.

Unterhalb der Portale 4 erstreckt sich in der vorliegenden Ausführungsform ein Werkstückstisch 20 zum Tragen der jeweiligen zu bemusternden Werkstücke 2, der in der in Fig. 1 gezeigten x-Richtung verfahrbar ist. Der Werkstücktisch 20 kann auf unterschiedlichste Art und Weise ausgestaltet und beispielsweise auch durch ein umlaufendes Förderband oder dergleichen gebildet sein. Der Werkstücktisch 20 bildet durch seine Verfahrbarkeit gleichzeitig eine Werkstücktrageinrichtung und einen Teil der Fördervorrichtung gemäß der vorliegenden Erfindung.

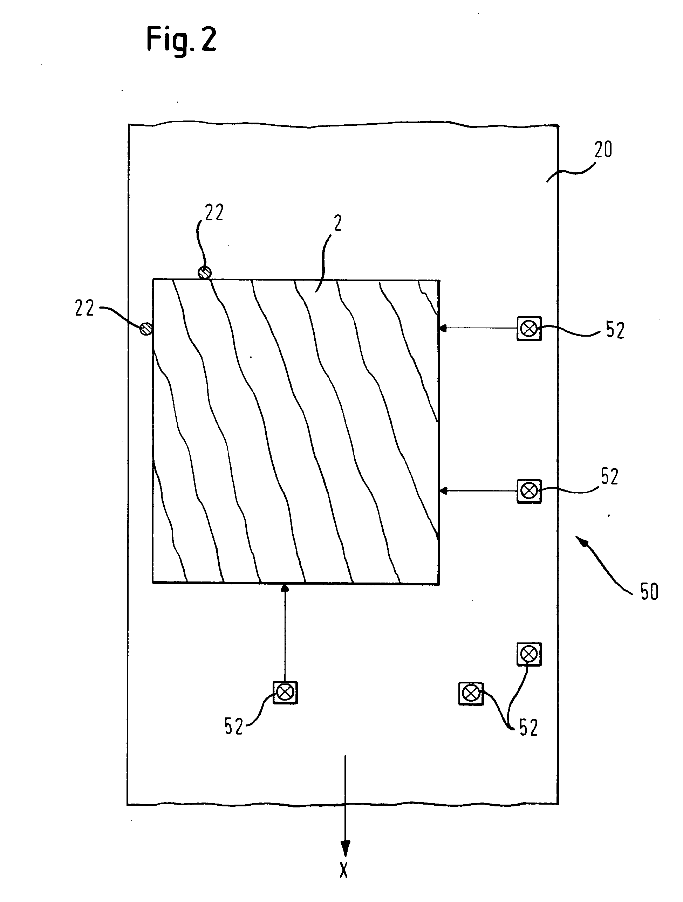

Die Anordnung eines plattenförmigen Werkstücks 2 auf dem Werkstücktisch 20 ist in Fig. 2 in einer Draufsicht näher gezeigt. Der Werkstücktisch 20 besitzt in der vorliegenden Ausführungsform ausfahrbare Anschlagbolzen 22, an welche das Werkstück 2 zur Grobpositionierung anlegbar ist. Ferner sind auf dem Werkstücktisch 20 mehrere Abstandssensoren 52 angeordnet, die Teil einer Groberfassungseinrichtung 50 sind. Die in Fig. 2 gezeigten Abstandssensoren sind eingerichtet, den Abstand zwischen den Sensoren und einer Seitenfläche (Schmalfläche) des jeweiligen Werkstücks 2 zu erfassen. Dabei sind die Sensoren 52 in der vorliegenden Ausführungsform um eine sich orthogonal zur Oberfläche des Werkstücktisches 20 erstreckende Achse drehbar und gegebenenfalls parallel zur Oberfläche verfahrbar. Die Groberfassungseinrichtung 50 dient somit zur Groberfassung der Geometrie und Positionierung des jeweiligen Werkstücks 2.

Weitere Details des Werkstücktisches 20 sind in Fig. 3 gezeigt, die eine teilweise geschnittene Frontansicht der in Fig. 1 gezeigten Vorrichtung zeigt. Dort ist zu erkennen, dass das jeweilige Werkstück 2 beispielsweise über Vakuumsauger 24 auf dem Werkstücktisch 20 fixiert sein kann. Ebenso ist es möglich, entsprechende Sauger oder Saugöffnungen in den Werkstücktisch bzw. ein Werkstückband zu integrieren.

Ferner umfasst die erfindungsgemäße Vorrichtung 1 eine Erfassungseinrichtung 40 zur Erfassung der Relativposition der Ink-Jet-Druckeinrichtung 10 und der jeweiligen zu bemusternden Oberfläche eines Werkstücks 2. Die Erfassungseinrichtung 40 weist in der vorliegenden Ausführungsform mehrere Arten von Sensoren 42, 46 auf, die in den Figuren 3, 4 und 5 am besten zu erkennen sind. Zunächst umfasst die Erfassungseinrichtung 40 in der vorliegenden Ausführungsform drei Abstandssensoren 42, die an der Druckeinrichtung 10 benachbart zu den Düsen 12 angeordnet sind und in einer Richtung messen, die im Wesentlichen parallel zu der Tintenausstoßrichtung der Düsen 12 ist (Fig. 4). Mit diesen Abstandssensoren kann einerseits der absolute Abstand zwischen der Druckeinrichtung 10 und dem Werkstück 2 ermittelt werden, darüber hinaus kann jedoch aus den erhaltenen Abstandsdaten auch auf die genaue Kontur des jeweiligen Werkstücks 2 geschlossen werden.

Wie in den Figuren 3 und 5 am besten zu erkennen ist, sind weitere Abstandssensoren 42 jeweils über ein in der vorliegenden Ausführungsform verschwenkbares Element 44 an der Druckeinrichtung 10 angeordnet. Durch das verschwenkbare Element 44 ist der jeweilige Sensor in eine ausgefahrene Position bringbar, die in Fig. 5 am besten zu erkennen ist. In dieser Position messen die in Fig. 5 gezeigten Sensoren 42 in einer Richtung, die im Wesentlichen orthogonal zur Tintenausstoßrichtung der Düsen 12 ist. Hierdurch kann die Dicke bzw. Höhe des jeweiligen zu bedruckenden Bereichs erfasst und ein "Overspray" vermieden werden.

Darüber hinaus ist an der Druckeinrichtung 10 benachbart zu den Tintenaustrittsdüsen 12 in der vorliegenden Ausführungsform zwei Bilderfassungssensoren 46 angeordnet, der ebenfalls in einer Richtung im Wesentlichen parallel zu der Tintenausstoßrichtung der Düsen 12 messen. Dabei ist jedoch zu beachten, dass alternativ oder zusätzlich zu diesen Bilderfassungssensoren auch an anderer geeigneter Stelle der Vorrichtung ein oder mehrere Bilderfassungssensor(en) - stationär oder verfahrbar - angeordnet sein können.

Bei den Bilderfassungssensoren 46 kann es sich beispielsweise um eine CCD-Kamera oder dergleichen handeln, die ein vollständiges Abbild eines zu bedruckenden oder bereits bedruckten Bereichs des jeweiligen Werkstücks 2 erstellen kann.

Obgleich in den Figuren nicht gezeigt, sind einerseits sämtliche Sensoren und andererseits die Druckeinrichtung und bevorzugt auch die übrigen Betriebsbauteile der Vorrichtung 1 mit einer Steuereinrichtung verbunden, welche die jeweiligen, durch die Sensoren erfassten Daten auswertet und auf dieser Grundlage den Betrieb der Vorrichtung, insbesondere der Druckeinrichtung steuert. Dabei ist die Steuereinrichtung eingerichtet, die von den Bilderfassungssensoren erhaltenen Bilddaten zumindest hinsichtlich Farbspektrum, Fehlstellen und Geometrie der bedruckten oder unbedruckten Werkstückoberfläche zu analysieren.

Ferner sind an der Druckeinrichtung 10 Trocknungseinheiten 14, beispielsweise UV-Trockner, vorgesehen (Fig. 3), die dazu dienen, die durch die Druckeinrichtung aufgebrachte Tinte zügig zu trocknen, um mögliche Verzerrungen oder Verschmierungen des Druckbildes zu verhindern. Obgleich in den Figuren nicht gezeigt, können die Trocknungseinheiten 10 vorteilhaft auch zwischen den Düsen 12 und den Bilderfassungssensoren 46 gelegen sein, so dass auf das jeweilige Werkstück 2 aufgebrachte Tinte vor einer Bilderfassung durch einen Bilderfassungssensor 46 zumindest teilweise durch die Trocknungseinrichtung 14 getrocknet werden kann.

Der Betrieb der erfindungsgemäßen Vorrichtung kann sich beispielsweise wie folgt darstellen. Zunächst wird ein Werkstück 2 über die Anschlagbolzen 22 auf dem Werkstücktisch 20 grob positioniert und über die Vakuumsauger 24 fixiert. Anschließend werden die Positionierung und/oder Kontur des Werkstücks 2 auf dem Werkstücktisch 20 durch die Sensoren 52 erfasst und diese Daten an die Steuereinrichtung weitergegeben.

Daraufhin wird der Werkstücktisch 20 in x-Richtung verfahren, sodass das Werkstück 2 durch in die Spindeleinheiten 6 eingewechselte Werkzeuge, Aggregate oder Druckeinheiten bearbeitet bzw. veredelt werden kann. Dabei vollzieht sich der Betrieb der Druckeinrichtung beispielsweise wie folgt.

Auf der Grundlage der Daten von den Sensoren 52 wird die Druckeinrichtung 10 mit der entsprechenden Spindel 6 entlang des Portals 4 zu dem zu bedruckenden Werkstück 2 verfahren. Dabei führen die Sensoren 42, 46 kontinuierlich einen Messbetrieb aus, sodass das Vorhandensein und gegebenenfalls der Abstand des jeweiligen Werkstücks und darüber hinaus (durch den vorlaufenden Bilderfassungssensor 46) auch weitere Informationen über das Werkstück 2 erhalten werden können.

Auf der Grundlage dieser Daten gibt die Steuereinrichtung Drucksignale an die jeweiligen Düsen 12 (bzw. die zugehörigen piezoelektrischen Aktoren oder Thermoelemente) aus, sodass das Werkstück 2 bedruckt wird. In Abhängigkeit von den Erfassungsdaten der Sensoren 42, 46 können dabei einzelne Düsen oder Düsengruppen zu- oder abgeschaltet werden, um Abmessungs-, Lage- oder sonstige Toleranzen oder Abweichungen des Werkstücks 2 zu kompensieren. Alternativ oder zusätzlich ist es im Rahmen der Erfindung ebenso möglich, dass einzelne oder mehrere Düsen der Druckeinrichtung 10 über Piezostellmittel oder dergleichen erstellt werden, um deren Position oder Ausstoßrichtung an das Werkstück 2 anzupassen.

Beim Bedrucken einer großen Seitenfläche eines Werkstücks 2 arbeiten neben dem Bilderfassungssensor 46 primär die neben den Düsen 12 angeordneten Sensoren 42, die in Fig. 4 am besten zu erkennen sind. Zum Bedrucken einer Schmalfläche des Werkstücks 2 kommen alternativ oder zusätzlich die Sensoren 42 zum Einsatz, die über schwenkbare Elemente 44 ausfahrbar sind, um die Höhe der Schmalfläche zu erfassen und so ein Overspray zu verhindern.

Nach dem Bedrucken eines Oberflächenabschnitts kann dieser gegebenenfalls durch die Trocknungseinheiten 14 getrocknet werden, und zwar gegebenenfalls auch simultan zum Druckvorgang.

Ferner führt nicht nur der vorlaufende Bilderfassungssensor 46 (der während des Druckvorganges in Bewegungsrichtung der Druckeinheit 10 vorne liegende Bilderfassungssensor 46), sondern auch der nachlaufende Bilderfassungssensor während des Druckvorganges eine Bilderfassung durch. Diese Ist-Bilddaten werden an die Steuereinrichtung weitergegeben und hinsichtlich Farbspektrum und möglichen Fehlstellen des aufgebrachten Druckbildes mit Soll-Bilddaten (d.h. mit den dem Druckvorgang zugrunde liegenden Bilddaten) verglichen. Sofern bei diesem Soll-/Istvergleich Abweichungen festgestellt werden, kann die Steuereinrichtung verschiedene Maßnahmen treffen. Insbesondere kann die Steuereinrichtung auf der Grundlage der Abweichung die an die Druckeinrichtung ausgegebenen Steuersignale (Steuerimpulse) korrigieren, beispielsweise hinsichtlich der Wellenform und/oder Amplitude der Steuersignale. Alternativ oder zusätzlich kann die Steuereinrichtung veranlassen, dass der Druckvorgang zu einem geeigneten Zeitpunkt unterbrochen und eine automatische oder manuelle Reinigung der Druckeinrichtung durchgeführt wird. Auch kann die Druckeinrichtung bei großem Soll-/Istabweichungen den Betrieb der Vorrichtung vollständig anhalten oder Fehlermeldungen ausgeben, beispielsweise dass eine Wartung der Druckeinrichtung erforderlich ist, andere Drucktinten verwendet werden müssen, etc.

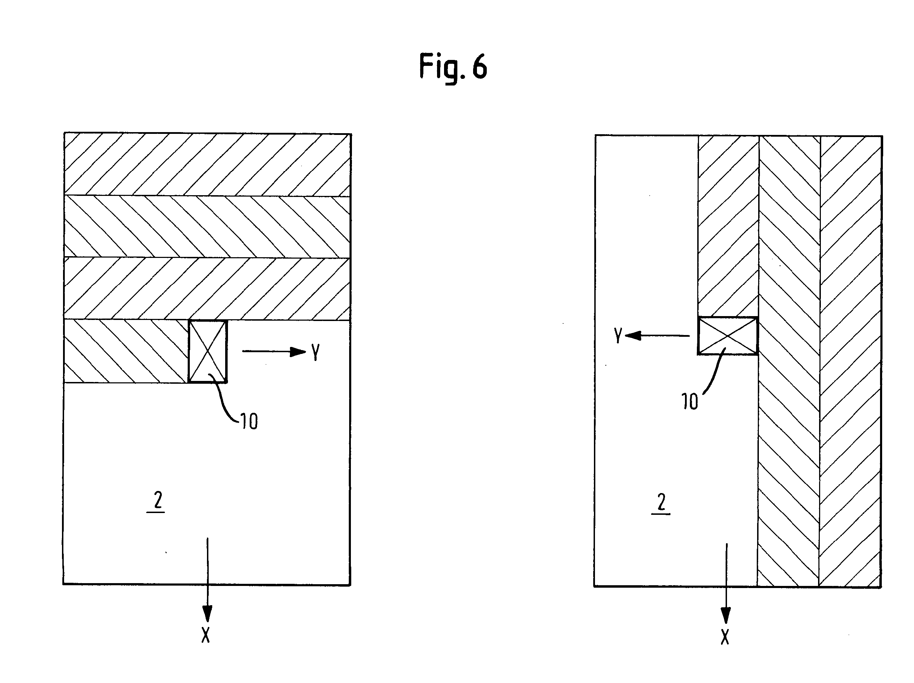

Die Verfahrwege der Druckeinrichtung 10 und/oder des Werkstücks 2 sind in Fig. 6 schematisch dargestellt. Die linke Zeichnung in Fig. 6 zeigt einen Betrieb im so genannten Querdruck, bei welchem sich die Druckeinrichtung 10 zusammen mit der Spindeleinheit 6 entlang des Portals 4 in y-Richtung hin- und herbewegt und das Werkstück 2 durch den Werkstücktisch 20 in x-Richtung weiter getaktet wird.

Alternativ ist es ebenso möglich, dass in Fig. 6 rechts dargestellte Druckschema einzusetzen, das als Längsdruck bezeichnet werden kann. Bei diesem ist die Druckeinrichtung 10 während des Druckvorganges selbst im Wesentlichen stationär, und das Werkstück 2 wird mit dem Werkstücktisch 20 in x-Richtung hin- und herverfahren. Die Druckeinrichtung 10 muss somit lediglich in y-Richtung weiter getaktet werden, nachdem das Drucken einer Bahn abgeschlossen ist. Darüber hinaus sind im Rahmen der vorliegenden Erfindung auch Kombinationen beider Betriebe möglich, und es können beispielsweise auch schräg angeordnete Bahnen oder dergleichen gedruckt werden.

## Patentansprüche

1. Vorrichtung (1) zum Bemustern von Werkstücken (2), die bevorzugt zumindest teilweise aus Holz, Holzwerkstoffen oder dergleichen bestehen, mit:
einer Ink-Jet-Druckeinrichtung (10) mit einer Mehrzahl von Düsen (12), aus denen Tintentropfen ausgestoßen werden können,
einer Werkstücktrageinrichtung (20) zum Tragen des zu bemusternden Werkstücks (2),
einer Fördervorrichtung zum Herbeiführen einer Relativbewegung zwischen dem zu bemusternden Werkstück (2) und der Druckeinrichtung (10),
**dadurch gekennzeichnet, dass**
sie ferner mindestens einen Bilderfassungssensor (46) aufweist.

2. Vorrichtung nach Anspruch 1, **dadurch gekennzeichnet, dass** sie ferner eine Steuereinrichtung aufweist, die mit dem mindestens einen Bilderfassungssensor und der Ink-Jet-Druckeinrichtung in Verbindung steht.

3. Vorrichtung nach Anspruch 1 oder 2, **dadurch gekennzeichnet, dass** mindestens ein Bilderfassungssensor (46) eine Kamera, insbesondere eine CCD-Kamera, und/oder ein Farbmessgerät aufweist.

4. Vorrichtung nach einem der vorhergehenden Ansprüche, **dadurch gekennzeichnet, dass** die Steuereinrichtung eingerichtet ist, von dem Bilderfassungssensor (46) erhaltenen Bilddaten zu analysieren, und zwar bevorzugt zumindest hinsichtlich Farbspektrum und/oder Fehlstellen und/oder Geometrie und/oder Farbraum.

5. Vorrichtung nach einem der vorhergehenden Ansprüche, **dadurch gekennzeichnet, dass** sie ferner eine Trocknungseinrichtung (14), insbesondere eine UV-Trocknungseinrichtung aufweist.

6. Vorrichtung nach Anspruch 5, **dadurch gekennzeichnet, dass** die Trocknungseinrichtung (14) derart angeordnet ist, dass auf das jeweilige Werkstück (2) aufgebrachte Tinte vor einer Bilderfassung durch den mindestens einen Bilderfassungssensor (46) zumindest teilweise durch die Trocknungseinrichtung (14) getrocknet werden kann.

7. Verfahren zum Bemustern von Werkstücken (2), die bevorzugt zumindest teilweise aus Holz, Holzwerkstoffen oder dergleichen bestehen, unter Einsatz einer Vorrichtung (1) nach einem der vorhergehenden Ansprüche, mit den Schritten:
Bedrucken zumindest eines Abschnitts eines Werkstücks (2) mittels der Druckeinrichtung (10), und
Durchführen einer Bilderfassung im Bereich des bedruckten Abschnitts mittels des Bilderfassungssensors (46).

8. Verfahren nach Anspruch 7, **dadurch gekennzeichnet, dass** die durch die Bilderfassung erhaltenen Ist-Bilddaten mit Soll-Bilddaten verglichen werden, und zwar bevorzugt zumindest hinsichtlich Farbspektrum und/oder Fehlstellen und/oder Geometrie und/oder Farbraum.

9. Verfahren nach Anspruch 8, **dadurch gekennzeichnet, dass** die von der Steuereinrichtung zur Druckeinrichtung ausgegebenen Steuersignale auf der Grundlage des Soll-Ist-Vergleichs korrigiert werden, um die Soll-Ist-Abweichung zu minimieren.

10. Verfahren nach Anspruch 9, **dadurch gekennzeichnet, dass** die von der Steuereinrichtung zur Druckeinrichtung ausgegebenen Steuersignale derart korrigiert werden, dass Intensität und/oder Verlauf der Steuerimpulse zu mindestens einer Düse der Druckeinrichtung verändert werden.

11. Verfahren nach Anspruch 9 oder 10, **dadurch gekennzeichnet, dass** die von der Steuereinrichtung zur Druckeinrichtung ausgegebenen Steuersignale derart korrigiert werden, dass eine oder mehrer Düsen zu- oder abgeschaltet werden.

12. Verfahren nach einem der Ansprüche 8 bis 11, **dadurch gekennzeichnet, dass** auf der Grundlage des Soll-Ist-Vergleichs bei Vorliegen einer vorbestimmten Soll-/Ist-Abweichung eine Reinigung der Druckeinrichtung durchgeführt wird.
